# EUROPÄISCHE PATENTANMELDUNG

(11) **EP 0 585 729 A1**
(43) Veröffentlichungstag der Anmeldung: **09.03.1994**
(21) Anmeldenummer: 93113181.7
(22) Anmeldetag: 18.08.1993
(51) Int. Cl.: C09B 67/40

(54) **Farbgemisch für Brillen**

(30) Priorität: 03.09.1992 DE 4229381
(71) Anmelder: Keller, Regina, D-22045 Hamburg (DE)
(72) Erfinder: Austen, Hans-Joachim, D-75428 Illingen (DE)
(74) Vertreter: Jeck, Anton, Dipl.-Ing.

(57) **Zusammenfassung**

Es handelt sich um ein Farbgemisch zum Aufbringen auf Gebrauchsgegenstände, insbesondere Brillen aus Kunststoff oder Metall mit Lackbeschichtungen. Es besteht aus
- bis 90 Gew.% Methoxypropanol
- 2 bis 20 Gew.% Zusatzlösemittel
- 1 bis 4 Gew.% Fettalkoholethoxylat
- 1 bis 9 Gew.% Wasser
- Dispersionsfarbstoffe
- 1 bis 6 Gew.% Polyglycole
- 0,1 bis 2,0 Gew.% Methylcellulose.

## Beschreibung

Die Erfindung betrifft ein Farbgemisch zum Aufbringen auf Gebrauchsgegenstande, insbesondere Brillen aus Kunststoff oder Metall mit Lackbeschichtungen.

Es ist bekannt, daß den Benutzern von Brillen nur eine geringe Auswahl von Brillengestellen mit unterschiedlichen Farben angeboten werden konnte. Diese Farbpalette entspricht zudem nicht unbedingt dem Geschmack des Benutzers. Daher werden dem Benutzer in zunehmendem Maße Farbgemische angeboten, die auf das Brillengestell aufgetragen werden konnen, die jedoch eine geringe Haltbarkeit aufweisen, was insbesondere dadurch zum Ausdruck kommt, daß die ursprünglich satten Farben verblassen und sogar ganz untergehen.

Ausgehend von dem obigen Stand der Technik liegt der Erfindung die Aufgabe zugrunde, hier Abhilfe zu schaffen und ein Farbgemisch zum Aufbringen auf Gebrauchsgegenstände vorzuschlagen, das bei üblichen Umwelteinflussen eine hohe Dauerhaftigkeit aufweist.

Die gestellte Aufgabe wird erfindungsgemäß durch die Merkmale des Patentanspruches 1 gelöst.

Man erkennt, daß die Erfindung jedenfalls dann verwirklicht ist, wenn es sich um ein Farbgemisch handelt, das in den Gebrauchsgegenstand diffundiert, so daß es integraler Bestandteil des Gebrauchsgegenstandes wird.

Weitere zweckmäßige und vorteilhafte Ausgestaltungen der Erfindung gehen aus den Unteranspruchen hervor.

Eine besonders zweckmäßige Ausgestaltung sieht vor, daß das Zusatzlösemittel aus einer Mischung von Methylestern der Bernstein-, Glutar- und Adipinsaure besteht. Hierbei können diese Maßnahmen auch so getroffen sein, daß das Zusatzlösemittel aus Triethylenglykolmonomethylether oder Methylethylketon oder Ethylenglykoldialkylether oder Triethylenglykoldimethylether besteht. Bezuglich der Farben ist es besonders zweckmäßig, wenn die Dispersionsfarbstoffe aus Azo-, Chinophthalon- oder Anthrachinonfarbstoffen bestehen.

Der Vorteil dieser Maßnahmen besteht auch insbesondere darin, daß es sich bei den Diffussionsfarbstoffen um solche Farbstoffe handelt, deren Farbreste vom Werkzeug und den zu färbenden Gegenstand mit warmem Wasser gereinigt werden können.

Die Erfindung wird nun anhand eines Ausführungsbeispieles näher erläutert.

Es wird ein Brillengestell aus Kunststoff bzw. Metall mit Lackbeschichtung genommen, das zunächst mit warmem Wasser und ähnlichen Reinigungsmitteln gereinigt wird. Daraufhin wird mit einem Pinsel das in den Ansprüchen definierte Farbgemisch auf das Brillengestell aufgetragen. Durch die Lösemittel wird die obere Schicht des Brillengestells gequollen, und der Diffussionsfarbstoff diffundiert in das Brillengestell. Nachdem die Lösemittel verdunstet sind, nimmt auch die Oberfläche des Brillengestells ihre ursprungliche Harte und ihr ursprüngliches Aussehen an, wobei die Farbstoffe fester Bestandteil des Brillengestells sind. Danach wird das Brillengestell sowie das Werkzeug (Pinsel) mit warmem Wasser gewaschen.

## Patentansprüche

1. Farbgemisch zum Aufbringen auf Gebrauchsgegenstände, insbesondere Brillen aus Kunststoff oder Metall mit Lackbeschichtungen,
gekennzeichnet durch
- bis 90 Gew.% Methoxypropanol
- 2 bis 20 Gew.% Zusatzlösemittel
- 1 bis 4 Gew.% Fettalkoholethoxylat
- 1 bis 9 Gew.% Wasser
- Dispersionsfarbstoffe
- 1 bis 6 Gew.% Polyglycole
- 0,1 bis 2,0 Gew.% Methylcellulose

2. Farbgemisch nach Anspruch 1,
dadurch gekennzeichnet,
daß das Zusatzlösemittel aus einer Mischung von Methylestern der Bernstein-, Glutar- und Adipinsäure besteht.

3. Farbgemisch nach Anspruch 1,
dadurch gekennzeichnet,
daß das Zusatzlösemittel aus Triethylenglykolmonomethylether oder Methylethylketon oder Ethylenglykoldialkylether oder Triethylenglykoldimethylether besteht.

4. Farbgemisch nach einem der Anspruche 1 bis 3,
dadurch gekennzeichnet,
daß die Dispersionsfarbstoffe aus Azo-, Chinophthalon- oder Anthrachinonfarbstoffen bestehen.
